# EUROPEAN PATENT APPLICATION

(11) **EP 3 542 937 A1**
(43) Date of publication of application: **25.09.2019**
(21) Application number: 17871628.8
(22) Date of filing: 07.07.2017
(51) Int. Cl.: B23C 5/12, B23C 3/12

(54) **CUTTING TOOL AND CUTTING METHOD**

(30) Priority: 15.11.2016 JP 2016222374
(71) Applicant: Sumitomo Electric Hardmetal Corp., Itami-shi, Hyogo 664-0016 (JP); Sumitomo Electric Industries, Ltd., Osaka-shi, Osaka 541-0041 (JP)
(72) Inventor: YOSHIDA, Minoru, Itami-shi Hyogo 664-0016 (JP); KANDA, Takashi, Itami-shi Hyogo 664-0016 (JP); TERAZAWA, Satoshi, Itami-shi Hyogo 664-0016 (JP)
(74) Representative: Boult Wade Tennant LLP
(86) International application number: PCT/JP2017/024926
(87) International publication number: WO 2018/092351

(57) **Abstract**

A cutting tool is a cutting tool constituted of a formed end mill, and includes a shank portion, a back chamfering edge portion, and an outer peripheral cutting edge portion. The back chamfering edge portion has a back chamfering edge. The outer peripheral cutting edge portion is located between the shank portion and the back chamfering edge portion and has a cutting edge at an outer peripheral surface of the outer peripheral cutting edge portion. The cutting edge of the outer peripheral cutting edge portion is a right hand cut left hand helix edge.

## Description

### TECHNICAL FIELD

The present invention relates to a cutting tool and a cutting method.

The present application claims a priority based on Japanese Patent Application No. 2016-222374 filed on November 15, 2016, the entire content of which is incorporated herein by reference.

### BACKGROUND ART

Generally, when a plate-like component is perforated using a tool such as a drill or an end mill, a burr called "exit burr" is likely to be formed at a backside surface opposite to the processed surface of the plate-like component. In such a case, it is often designed to remove the burr by providing a chamfered portion in the component shape. Generally, such a process is called "back chamfering".

A tool used for such back chamfering is in the form of a formed end mill, and has a cutting edge having an angle at a tip of the tool. The cutting edge is referred to as "chamfering edge".

It should be noted that for example, Japanese Patent Laying-Open No. 11-156622 (Patent Literature 1) discloses a spherical-cutting-edge end mill that can be used also for back chamfering.

### CITATION LIST

### PATENT LITERATURE

PTL 1: Japanese Patent Laying-Open No. 11-156622

### SUMMARY OF INVENTION

A cutting tool according to the present disclosure is a cutting tool constituted of a formed end mill, and includes a shank portion, a back chamfering edge portion, and an outer peripheral cutting edge portion. The back chamfering edge portion has a back chamfering edge. The outer peripheral cutting edge portion is located between the shank portion and the back chamfering edge portion and has a cutting edge at an outer peripheral surface of the outer peripheral cutting edge portion. The cutting edge of the outer peripheral cutting edge portion is a right hand cut left hand helix edge.

### BRIEF DESCRIPTION OF DRAWINGS

Fig. 1 is a perspective view showing a configuration of a cutting tool according to one embodiment.
Fig. 2 is a front view showing a configuration of the cutting tool shown in Fig. 1.
Fig. 3 is a front view showing a configuration of a first comparative example.
Fig. 4 is a front view showing a configuration of a second comparative example.

### DETAILED DESCRIPTION

### [Problems to be Solved by the Present Disclosure]

When the shape of the cutting edge is thus complicated and shape precision is required, the tool often has to have a straight cutting edge. However, with the straight cutting edge, cutting resistance becomes large during use to often result in chatter vibration.

Meanwhile, when the cutting edge is formed into a shape of a helix edge in order to improve cuttability, problems such as deformation of a workpiece, chatter vibration, and edge chipping often occur.

One embodiment of the present disclosure has been made to solve the foregoing problem, and has an object to provide a cutting tool and a cutting method, by each of which occurrence of deformation of a workpiece, chatter vibration, and edge chipping can be suppressed.

### [Advantageous Effect of the Present Disclosure]

According to one embodiment of the present disclosure, a cutting tool and a cutting method can be provided, by each of which occurrence of deformation of a workpiece, chatter vibration, and edge chipping can be suppressed.

### [Summary of Embodiments of the Present Invention]

First, the following describes a summary of embodiments of the present invention.
(1) A cutting tool 10 according to one embodiment of the present invention is a cutting tool constituted of a formed end mill, and includes a shank portion 10C, a back chamfering edge portion 10A, and an outer peripheral cutting edge portion 10B. Back chamfering edge portion 10A has a back chamfering edge 1a. Outer peripheral cutting edge portion 10B is located between shank portion 10C and back chamfering edge portion 10A and has a cutting edge 2a at an outer peripheral surface of outer peripheral cutting edge portion 10B. Cutting edge 2a of outer peripheral cutting edge portion 10B is a right hand cut left hand helix edge.
   According to cutting tool 10 according to (1), cutting resistance toward the shank portion 10C side is generated in back chamfering edge portion 10A during cutting. On the other hand, cutting force by the right hand cut left hand helix edge is exerted toward the tip side in outer peripheral cutting edge portion 10B. Hence, the cutting resistance exerted on back chamfering edge portion 10A and the cutting force exerted on outer peripheral cutting edge portion 10B are exerted in opposite directions and are therefore canceled by each other as internal force. Accordingly, an effect of reducing cutting force on a workpiece 20 can be obtained, thereby suppressing problems such as deformation of workpiece 20, chatter vibration, and edge chipping.
(2) In cutting tool 10 according to (1), cutting edge 2a of outer peripheral cutting edge portion 10B may extend straightly and may be inclined at a negative angle. Accordingly, cutting force can be exerted toward the tip side in outer peripheral cutting edge portion 10B.
(3) In cutting tool 10 according to (1) or (2), a helix angle at cutting edge 2a of outer peripheral cutting edge portion 10B may be more than or equal to 3° and less than or equal to 30°. Accordingly, cutting force can be appropriately exerted toward the tip side in outer peripheral cutting edge portion 10B. When the helix angle is less than 3°, cutting force exerted toward the tip side becomes insufficient. On the other hand, when the helix angle is more than 30°, a contact length of the cutting edge becomes large, thus resulting in too large resistance.
(4) In cutting tool 10 according to any one of (1) to (3), back chamfering edge portion 10A may protrude to an outer peripheral side relative to outer peripheral cutting edge portion 10B, and back chamfering edge 1a may be more distant away from a center of rotation C of outer peripheral cutting edge portion 10B as back chamfering edge 1a is more distant away from shank portion 10C. Accordingly, the backside surface of workpiece 20 can be chamfered.
(5) Cutting tool 10 according to any one of (1) to (4) may further include an end cutting edge 10D located at a tip opposite to shank portion 10C. Accordingly, a perforating process can be performed.
(6) A cutting method according to one embodiment of the present invention is a cutting method using cutting tool 10 recited in any one of (1) to (5). In this cutting method, a workpiece 20 is processed by cutting tool 10 rotating clockwise in a viewpoint in which back chamfering edge portion 10A is seen from the shank portion 10C side in cutting tool 10.

According to the cutting method according to (6), workpiece 20 is processed by cutting tool 10 rotating clockwise. Accordingly, during cutting, cutting resistance toward the shank portion 10C side is generated in back chamfering edge portion 10A but cutting force by the right hand cut left hand helix edge is exerted toward the tip side in outer peripheral cutting edge portion 10B. Hence, the cutting resistance exerted on back chamfering edge portion 10A and the cutting force exerted on outer peripheral cutting edge portion 10B are exerted in opposite directions and are therefore canceled by each other as internal force. Accordingly, an effect of reducing cutting force on workpiece 20 can be obtained, thereby suppressing problems such as deformation of workpiece 20, chatter vibration, and edge chipping.

### [Details of Embodiments of the Present Invention]

The following describes details of the embodiments of the present invention with reference to figures. It should be noted that in the below-mentioned figures, the same or corresponding portions are given the same reference characters and are not described repeatedly.

First, a configuration of a cutting tool 10 according to one embodiment will be described.

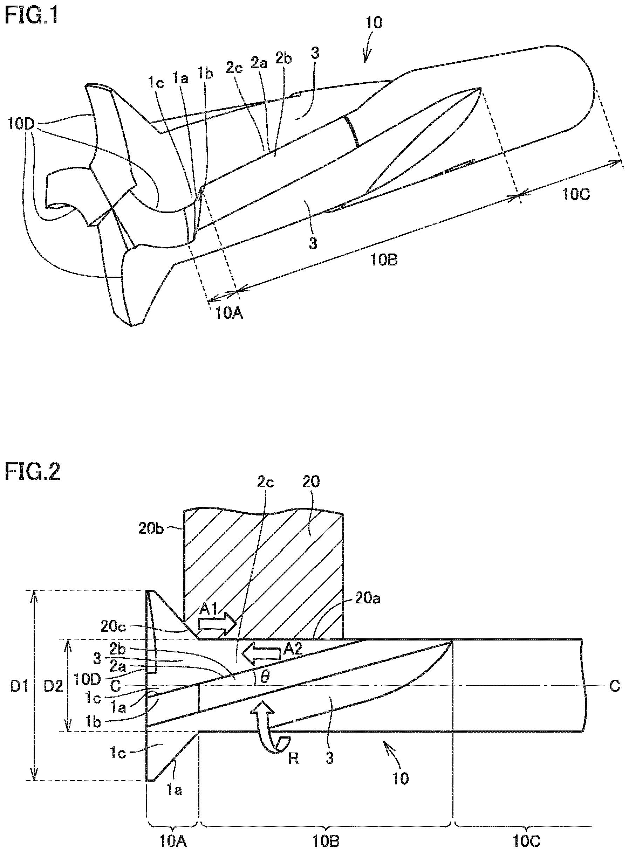

As shown in Fig. 1, cutting tool 10 according to the present embodiment is, for example, a cutting tool constituted of a formed end mill, and has a shank portion 10C, back chamfering edge portions 10A, and an outer peripheral cutting edge portion 10B.

Shank portion 10C is a portion to be attached to a main shaft of a milling machine. This shank portion 10C is, for example, a straight shank but may be a taper shank.

Each of back chamfering edge portions 10A is disposed at the tip side of cutting tool 10. Back chamfering edge portion 10A protrudes to the outer peripheral side relative to outer peripheral cutting edge portion 10B. Accordingly, as shown in Fig. 2, a maximum diameter D1 of the tip of cutting tool 10 is larger than a maximum diameter D2 of shank portion 10C. In the present embodiment, the plurality of (for example, four) back chamfering edge portions 10A are disposed.

Each of the plurality of back chamfering edge portions 10A has a back chamfering edge 1a. This back chamfering edge 1a is constituted of a ridgeline at which flank face 1b and rake face 1c cross each other in back chamfering edge portion 10A. Each of the plurality of back chamfering edges 1a is more distant away from center of rotation C of outer peripheral cutting edge portion 10B as each of the plurality of back chamfering edges 1a is more distant away from shank portion 10C.

Each of the plurality of back chamfering edges 1a is a left hand helix edge, for example. However, each of the plurality of back chamfering edges 1a is not limited to the left hand helix edge, may be a straight edge or may be a right hand helix edge. Although cutting can be performed when each of the plurality of back chamfering edges 1a is a straight edge or a right hand helix edge, resistance by back chamfering edge 1a in the direction toward the tip is not provided to cause large chattering, with the result that a burr is likely to be generated at the upper side of a workpiece. Therefore, each of the plurality of back chamfering edges 1a is preferably a left hand helix edge.

Outer peripheral cutting edge portion 10B is located between shank portion 10C and back chamfering edge portion 10A. Outer peripheral cutting edge portion 10B has a plurality of (for example, four) cutting edges 2a at the outer peripheral surface. Each of the plurality of cutting edges 2a is constituted of a ridgeline at which flank face 2b and rake face 2c cross each other in outer peripheral cutting edge portion 10B. Each of the plurality of cutting edges 2a is a right hand cut left hand helix edge.

Here, the term "right hand cut" indicates that cutting tool 10 is rotated clockwise in a viewpoint in which back chamfering edge portion 10A is seen from shank portion 10C. Moreover, the term "left hand helix edge" indicates that cutting edge 2a is twisted in the counter clockwise direction in the viewpoint in which back chamfering edge portion 10A is seen from shank portion 10C. In other words, the term "left hand helix edge" indicates that cutting edge 2a extends up to the left in a direction in which center of rotation (axial center) C of cutting tool 10 extends in the front view shown in Fig. 2.

It should be noted that the term "right hand helix edge" means opposite to the "left hand helix edge". Further, the expression "back chamfering edge 1a is a 'straight edge'" indicates that back chamfering edge 1a is parallel to center of rotation C of cutting tool 10 in the front view shown in Fig. 2.

Each of the plurality of cutting edges 2a extends straightly and is inclined at a negative angle, for example. A helix angle θ (Fig. 2) in each of the plurality of cutting edges 2a is more than or equal to 3° and less than or equal to 30°.

Here, helix angle θ refers to an inclination angle measured based on center of rotation C of cutting tool 10 as a reference, i.e., an inclination angle relative to center of rotation C. Specifically, assuming that center of rotation C is 0° in the front view shown in Fig. 2, a clockwise angle θ is regarded as a "positive angle" and a counter clockwise angle θ is regarded as a "negative angle".

Cutting tool 10 has a plurality of (for example, four) swarf discharging flutes 3 in the outer peripheral surface. Each of the plurality of swarf discharging flutes 3 extends from outer peripheral cutting edge portion 10B to the tip of cutting tool 10 via back chamfering edge portion 10A. Each of the plurality of swarf discharging flutes 3 is a left hand helix. A portion of a wall surface of swarf discharging flute 3 in back chamfering edge portion 10A constitutes rake face 1c of back chamfering edge portion 10A. Moreover, a portion of a wall surface of swarf discharging flute 3 in outer peripheral cutting edge portion 10B constitutes rake face 2c of outer peripheral cutting edge portion 10B.

Back chamfering edge 1a of back chamfering edge portion 10A and cutting edge 2a of outer peripheral cutting edge portion 10B are continuous to each other. Flank face 1b of back chamfering edge portion 10A and flank face 2b of outer peripheral cutting edge portion 10B are continuous to each other. Rake face 1c of back chamfering edge portion 10A and rake face 2c of outer peripheral cutting edge portion 10B are continuous to each other.

Cutting tool 10 further has an end cutting edge 10D. End cutting edge 10D is located at a tip opposite to shank portion 10C.

Next, the following describes a cutting method using cutting tool 10 in the present embodiment with reference to Fig. 2.

As shown in Fig. 2, cutting tool 10 is rotated in the clockwise direction (direction of an arrow R in Fig. 2) in a viewpoint in which back chamfering edge portion 10A is seen from the shank portion 10C side in cutting tool 10. A workpiece 20 is cut by cutting tool 10 in such a rotation state.

Specifically, a wall surface of a hole 20a of workpiece 20 is cut by cutting edge 2a of outer peripheral cutting edge portion 10B of cutting tool 10. At the same time, an open end 20c of hole 20a at the backside surface 20b side of workpiece 20 is cut by back chamfering edge 1a of back chamfering edge portion 10A. With this cutting by back chamfering edge 1a, an exit burr at open end 20c of hole 20a is removed and open end 20c is chamfered.

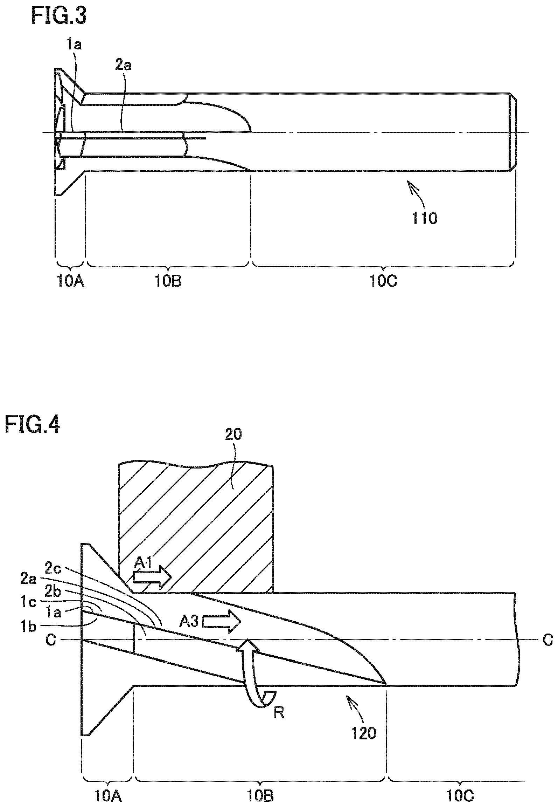

Next, the following describes function and effect of the present embodiment with reference to a comparison with each of a first comparative example shown in Fig. 3 and a second comparative example shown in Fig. 4.

As shown in Fig. 3, a cutting tool 110 in the first comparative example is different from cutting tool 10 of the present embodiment in that each of back chamfering edge 1a of back chamfering edge portion 10A and cutting edge 2a of outer peripheral cutting edge portion 10B is a straight edge. Meanwhile, as shown in Fig. 4, a cutting tool 120 in the second comparative example is different from cutting tool 10 of the present embodiment in that each of back chamfering edge 1a of back chamfering edge portion 10A and cutting edge 2a of outer peripheral cutting edge portion 10B is a right hand helix edge.

Configurations other than the above-described configuration of each of the first comparative example and the second comparative example are substantially the same as the configurations of cutting tool 10 of the present embodiment and therefore the same components are given the same reference characters and are not described repeatedly.

Since cutting edge 2a is a straight edge in the configuration of the first comparative example shown in Fig. 3, cutting resistance becomes large during cutting, with the result that chatter vibration is likely to occur.

On the other hand, in the configuration of the second comparative example shown in Fig. 4, cutting resistance force in back chamfering edge 1a is generated to be exerted in a direction toward shank portion 10C along center of rotation C of cutting tool 120 as indicated by an arrow A1. Moreover, since cutting edge 2a is a right hand helix edge, cutting force by cutting edge 2a is generated to be exerted in the direction toward shank portion 10C along center of rotation C of cutting tool 120 as indicated by an arrow A3.

As such, the cutting resistance exerted on back chamfering edge portion 10A and the cutting force exerted on outer peripheral cutting edge portion 10B are exerted in the same direction. Accordingly, force of pulling up workpiece 20 is greatly exerted in the direction toward shank portion 10C along center of rotation C of cutting tool 120. Accordingly, problems, such as deformation of workpiece 20, chatter vibration, and edge chipping, are often caused.

On the other hand, according to cutting tool 10 of the present embodiment, as shown in Fig. 2, cutting edge 2a is a left hand helix edge. Hence, cutting force by cutting edge 2a is generated in the direction toward the tip along center of rotation C of cutting tool 120 as indicated by an arrow A2. On the other hand, cutting resistance toward the shank portion 10C side is generated in back chamfering edge portion 10A during cutting as indicated by an arrow A1. Thus, the direction of the cutting resistance is opposite to the direction of the cutting force exerted on outer peripheral cutting edge portion 10B. Accordingly, the cutting resistance and the cutting force are canceled by each other as internal force. Accordingly, an effect of reducing cutting force on workpiece 20 can be obtained, thereby suppressing the problems such as deformation of workpiece 20, chatter vibration, and edge chipping.

Particularly, when plate-like workpiece 20 is cut using cutting tool 10 of the present embodiment, cutting resistance is reduced by the helical edge effect as compared with the straight edge. Moreover, as indicated by arrows A1, A2 of Fig. 2, cutting is performed using the opposite forces from both sides. This leads to reduced force of deforming the plate-like thin component serving as workpiece 20. Moreover, since cutting edge 2a is a left hand helix edge, a burr can be also suppressed from being generated at the entrance side of hole 20a.

The above-mentioned effect obtained by the cutting tool of the present embodiment also serves to suppress detachment of a layered structure when cutting a composite material having a layered form, such as CFRP (Carbon Fiber Reinforced Plastics).

Moreover, as shown in Fig. 2, cutting edge 2a of outer peripheral cutting edge portion 10B extends straightly and is inclined at a negative angle. Accordingly, cutting force can be exerted toward the tip side in outer peripheral cutting edge portion 10B.

Moreover, a helix angle at cutting edge 2a of outer peripheral cutting edge portion 10B is more than or equal to 3° and less than or equal to 30°. Accordingly, cutting force can be appropriately exerted toward the tip side in outer peripheral cutting edge portion 10B. When the helix angle is less than 3°, cutting force toward the tip side becomes insufficient. On the other hand, when the helix angle is more than 30°, a contact length of the cutting edge becomes large, thus resulting in too large resistance.

Further, back chamfering edge portion 10A protrudes to the outer peripheral side relative to outer peripheral cutting edge portion 10B, and back chamfering edge 1a is more distant away from center of rotation C of outer peripheral cutting edge portion 10B as back chamfering edge 1a is more distant away from shank portion 10C. Accordingly, the backside surface of workpiece 20 can be chamfered.

Moreover, since cutting tool 10 further includes end cutting edge 10D located at the tip opposite to shank portion 10C, a perforating process can be performed.

The embodiments and examples disclosed herein are illustrative and non-restrictive in any respect. The scope of the present invention is defined by the terms of the claims, rather than the embodiments described above, and is intended to include any modifications within the scope and meaning equivalent to the terms of the claims.

### REFERENCE SIGNS LIST

1a: back chamfering edge; 2a: cutting edge; 1b, 2b: flank face; 1c, 2c: rake face; 3: swarf discharging flute; 10, 110, 120: cutting tool; 10A: cutting edge portion; 10B: outer peripheral cutting edge portion; 10C: shank portion; 10D: end cutting edge; 20: workpiece; 20a: hole; 20b: backside surface; 20c: open end; A1, A2, A3: arrow; C: center of rotation.

## Claims

1. A cutting tool constituted of a formed end mill, the cutting tool comprising:
a shank portion;
a back chamfering edge portion having a back chamfering edge; and
an outer peripheral cutting edge portion located between the shank portion and the back chamfering edge portion and having a cutting edge at an outer peripheral surface of the outer peripheral cutting edge portion, wherein
the cutting edge of the outer peripheral cutting edge portion is a right hand cut left hand helix edge.

2. The cutting tool according to claim 1, wherein the cutting edge of the outer peripheral cutting edge portion extends straightly and is inclined at a negative angle.

3. The cutting tool according to claim 1 or claim 2, wherein a helix angle at the cutting edge of the outer peripheral cutting edge portion is more than or equal to 3° and less than or equal to 30°.

4. The cutting tool according to any one of claim 1 to claim 3, wherein
the back chamfering edge portion protrudes to an outer peripheral side relative to the outer peripheral cutting edge portion, and
the back chamfering edge is more distant away from a center of rotation of the outer peripheral cutting edge portion as the back chamfering edge is more distant away from the shank portion.

5. The cutting tool according to any one of claim 1 to claim 4, further comprising an end cutting edge located at a tip opposite to the shank portion.

6. A cutting method using the cutting tool recited in any one of claim 1 to claim 5, wherein a workpiece is processed by the cutting tool rotating clockwise in a viewpoint in which the back chamfering edge portion is seen from the shank portion side in the cutting tool.
